# EUROPÄISCHE PATENTSCHRIFT

(11) **EP 1 801 392 B1**
(45) Veröffentlichungstag und Bekanntmachung des Hinweises auf die Patenterteilung: **25.11.2009**
(21) Anmeldenummer: 06025409.1
(22) Anmeldetag: 08.12.2006
(51) Int. Cl.: F02D 9/06, F02B 37/013

(54) **Vorrichtung zur Steigerung der Bremsleistung einer mehrzylindrigen Brennkraftmaschine eines Fahrzeugs während des Motorbremsbetriebes**
Device for increasing the braking power of a multi-cylinder internal combustion engine of a vehicle during engine braking
Dispositif pour augmenter la performance de freinage d'un moteur à combustion interne à multicylindre d'un véhicule lors du fonctionnement du frein moteur

(30) Priorität: 20.12.2005 AT 20372005
(43) Veröffentlichungstag der Anmeldung: 27.06.2007
(73) Patentinhaber: MAN Nutzfahrzeuge Österreich AG, 4400 Steyr (AT)
(72) Erfinder: Rammer, Franz, Dipl.-Ing., 4493 Wolfern (AT); Leitenmayr, Franz, Ing., 4320 Perg (AT); Raab, Gottfried, Dipl.-Ing., 4320 Perg (AT)

(56) Entgegenhaltungen:
- EP-A- 0 736 672
- EP-A- 0 821 147
- EP-A- 1 258 603
- EP-A- 1 762 716
- WO-A-2004/053310
- DE-C1- 19 634 107
- US-A- 3 190 068
- US-A- 3 591 959
- US-A- 4 526 004
- US-A1- 2003 234 378
- UNIV.-PROF. DR. TECHN. DR. E.H. F. PISCHINGER: "Verbrennungsmotoren, Vorlesungsumdruck Band II" Oktober 1997 (1997-10), DRUCKEREI UND VERLAG MAINZ GMBH , AACHEN , XP002477150 * Seite 228 - Seite 231; Abbildungen 14.4-22 *

## Beschreibung

Die Erfindung betrifft gemäß dem Anspruch 1 eine Vorrichtung zur Steigerung der Bremsleistung einer mehrzylindrigen Brennkraftmaschine eines Fahrzeugs während des Motorbremsbetriebes.

Die Erfindung geht von Brennkraftmaschinen aus, die über eine motorinterne Motorbremsvorrichtung sowie einen ein- oder mehrstufigen Abgasturbolader mit (je Stufe) einer Abgasturbine und einem Ladeluftverdichter verfügen und außerdem zwei Abgassammelstränge aufweisen, über die das jeweils aus mehreren Zylindern ausgestoßene Abgas gruppenweise zusammengefasst einem Turbineneinlass zuführbar ist. Als Motorbremsvorrichtung sei hier z. B. jene aus der EP 0736672 B1 in Verbindung mit einem hierdurch geschützten Motorbremsverfahren bekannte genannt. Letzteres hat sich in hunderttausenden von in MAN-Lastkraftwagen und MAN-Omnibussen eingebauten Brennkraftmaschinen bestens bewährt und ist in Fachkreisen als die MAN-EVB (exhaust valve-brake/EVB^{®}) bekannt. Bei diesem Motorbremsverfahren befinden sich während des Motorbremsbetriebes die im Abgasstrang angeordneten Drosselklappen in einer Drosselstellung, in der der zugehörige Abgasstrang nicht vollständig geschlossen ist, so dass die Drosselklappe durch einen randseitig offen bleibenden schmalen Spalt von einem Teil des aufgestauten Abgases passiert werden kann. Dieser Abgas-Schlupf ist notwendig, um ein Blockieren bzw. Abwürgen der Brennkraftmaschine bis zum Stillstand oder ein Überhitzen der Brennkraftmaschine zu verhindern.

Obschon dieses bekannte Motorbremsverfahren hervorragende Bremsleistungen erbringt, ergibt sich für manche Anwendungsfälle der Wunsch nach einer Bremsleistungssteigerung während des Motorbremsbetriebes, um die im Fahrzeug vorhandenen weiteren Bremssysteme wie Retarder und Betriebsbremse stärker zu entlasten oder geringer dimensioniert darstellen zu können. Hierzu sind Zusatzmaßnahmen notwendig, mit denen es möglich wird, den Ladedruck während des Motorbremsbetriebes anzuheben, so dass sich deutlich höhere Abgasgegendrücke einstellen.

Zur Erzielung einer solchen Ladedruckerhöhung für Bremsleistungssteigerung sind bereits verschiedene Vorrichtungen und Methoden bekannt. IVECO verwendet hierzu einen Abgasturbolader mit variabler Turbinengeometrie (VTG), wobei zur Bremsleistungssteigerung der Turbinenquerschnitt verändert wird. Nachteilig ist dabei, dass VTG-Turbolader erheblich teurer als normale Abgasturbolader sind und wegen der vielen kleinen beweglichen Teile in der Turbine die für Turbolader geforderten Standzeiten und Wirkungsgrade nicht erreichen. Anstelle eines VTG-Laders verwendet DaimlerChrysler im Rahmen ihrer "Turbobrake" genannten Version einen Abgasturbolader, bei dem mittels eines verschiebbaren Ringes in der Turbine des Turboladers deren Durchsatzcharakteristik von Motorbetrieb auf Bremsbetrieb im Sinne kleinerer Durchsätze und eines sehr hohen Druckgefälles umstellbar und so im Bremsbetrieb der Ladedruck anhebbar ist. Dieser Abgasturbolader offenbart aber ähnliche Nachteile wie ein VTG-Turbolader. Weitere Beispiele für eine Bremsleistungssteigerung sind in der EP 0770772 B1 und EP 0821147 B1 aufgezeigt. In beiden Fällen zweigt stromauf einer Absperrklappe von einer Abgasleitung eine Bypassleitung ab, die entweder in einen turbinengehäuseinternen Sammelraum ausmündet, von dem Düsenöffnungen in Richtung Turbinenrad abgehen, oder mit einer einzigen turbinengehäusezwischenwandinternen Düsenbohrung kommuniziert, der austrittseitig ein Düsenring oder Leitgitter vorgeordnet ist, mit dem ein Düsenstrahl umgelenkt und in Richtung Außenumfang des Turbinenrades gerichtet wird. Diese beiden bekannten Lösungen haben ebenfalls den Nachteil, dass sie turbineninterne Umbaumaßnahmen oder Sonderturbinen erfordern und daher vergleichsweise teuer sind.

Desweiteren geht aus der prioritätsälteren, aber nicht vorveröffentlichten EP 1 762 716 A1 eine Vorrichtung zur Steigerung der Bremsleistung einer mehrzylindrigen Bremskraftmaschine eines Fahrzeuges während des Bremsbetriebes hervor, die folgende Merkmale aufweist: Einen ein- oder mehrstufigen Abgasturbolader mit (je Stufe) einer Abgasturbine und einem Ladeluftverdichter sowie zwei Abgassammelstränge, über die jeweils das aus mehreren Zylindern abgestoßene Abgas gruppenweise zusammengefasst einem Turbinen-Einlass zuführbar ist. Außerdem ist jeder Abgassammelstrang durch eine Absperrklappe während des Motorbremsbetriebes vollständig absperrbar und vom absperrbaren Bereich jedes Abgassammelstranges zweigt eine Bypassleitung ab. Jede der beiden Bypassleitungen kommuniziert mit einer Düsenbohrung, die in einer Wand der Abgasturbine ausgebildet ist. Beide Düsenbohrungen verlaufen in einem bestimmten Winkel zueinander und münden tangential auf den Außenbereich des Turbinenrades gerichtet in die Turbinenkammer aus. Mit dieser Einrichtung sind während eines Motorbremsbetriebes aus dem in den abgesperrten Abgassammelsträngen aufgestauten Abgas über die Bypassleitungen zwei Abgasteilströme abzweigbar, die dann über die Düsenbohrungen mit hohem Druck und hoher Geschwindigkeit auf die Laufschaufeln des Turbinenrades treffen, wodurch der Turbolader beschleunigt angetrieben und hieraus resultierend komprimierte Luft in die Brennräume der Brennkraftmaschine eingespeist wird, die darin dann bremsleistungssteigend wirksam ist. Eine motorinterne Motorbremseinrichtung, wie aus der EP 0 736 672 B1 bekannt, ist bei dem Motor der EP 1 762 716 A1 nicht offenbart. Die Leistungssteigerung für den Motorbremsbetrieb resultiert bei diesem Motor also ausschließlich aus den vorgenannten Mitteln.

Es ist daher Aufgabe der Erfindung, eine Vorrichtung zu einer weiteren Steigerung der Bremsleistung einer mehrzylindrigen Brennkraftmaschine eines Fahrzeugs zu schaffen, die schon über eine bremsleistungssteigernde motorinterne Motorbremseinrichtung verfügt, bei der in der Abgasturbine des Abgasturboladers bzw. bei einem zwei-stufigen Abgasturbolader in dessen Hochdruckstufe auf komplizierte Ein- und Umbauten verzichtbar ist, diese also einfach und unkompliziert realisiert werden kann, trotzdem aber eine stark erhöhte Bremsleistungssteigerung erbringt und daher eine einfachere Auslegung der Betriebsbremse und gegebenenfalls des/der zusätzlichen Retarder des Fahrzeugs erlaubt.

Diese Aufgabe ist erfindungsgemäß durch eine Vorrichtung mit den im Anspruch 1 angegebenen Merkmalen gelöst.

Vorteilhafte Ausgestaltungen und Weiterbildungen der Erfindung sind in den Unteransprüchen gekennzeichnet.

Entsprechend der Erfindung ist dabei während des Motorbremsbetriebes jeder der beiden Abgassammelstränge vollständig mittels einer eigenen Absperrklappe absperrbar. Außerdem zweigt erfindungsgemäß von jedem Abgassammelkanal strömungsmäßig vor dem durch die Absperrklappe absperrbaren Bereich eine Bypassleitung ab. Jede dieser Bypassleitungen kommuniziert erfindungsgemäß mit einer in einer Turbinenwand einer Abgasturbine ausgebildeten Düsenbohrung. Beide Düsenbohrungen verlaufen in einer zur Achse des Turbinenrades senkrechten Ebene entweder a) parallel zueinander oder b) in spitzem Winkel zueinander, dann ineinander übergehend. Beide Düsenbohrungen münden im Fall a) über je einen benachbarten Austritt oder im Fall b) über einen gemeinsamen Austritt tangential auf den Außenbereich des Turbinenrades gerichtet in die Turbinenkammer ein. Auf diese Weise ist es erfindungsgemäß möglich, dass während eines Motorbremsbetriebes aus dem stromauf der abgesperrten Absperrklappen in den Abgassammelsträngen aufgestauten Abgas über die Bypassleitungen zwei Abgasteilströme abzweigbar sind, die über die Düsenbohrungen entweder in Form von zwei Abgasstrahlen oder zu einem Gasstrahl vereinigt tangential auf den Außenbereich des Turbinenrades gerichtet in die Turbinenkammer der Abgasturbine eintreten und dort mit hohem Druck und hoher Geschwindigkeit auf die Laufschaufeln des Turbinenrades treffen, wodurch der Abgasturbolader beschleunigt angetrieben und resultierend hieraus komprimierte Luft über den Einlasstrakt in die Brennräume der Brennkraftmaschine einleitbar ist, was dort aufgrund der erhöhten Luftmenge und des erhöhten Gegendrucks zu einer erheblichen Bremsleistungssteigerung führt.

Dadurch, dass nur die Düsenbohrungen in einem Turbinengehäuse zu realisieren sind, kann der Abgasturbolader in seinem übrigen Aufbau im Wesentlichen unverändert gegenüber einem herkömmlichen dargestellt werden. Die übrigen Teile der erfindungsgemäßen Vorrichtung sind einfach und kompakt zusammenfassbar und mit dem Abgasturbolader sowie den Abgassammelsträngen zu vereinigen. Auf diese Einzelheiten ist in der Figurenbeschreibung näher eingegangen.

Nachfolgend ist die erfindungsgemäße Lösung anhand mehrerer in der Zeichnung dargestellter Ausführungsbeispiele näher erläutert. In der Zeichnung zeigen:
- Fig. 1: schematisch eine mehrzylindrige Brennkraftmaschine mit einstufigem Abgasturbolader und zugehöriger erfindungsgemäßer Vorrichtung,
- Fig. 2: schematisch eine mehrzylindrige Brennkraftmaschine mit zweistufigem Abgasturbolader und zugehöriger erfindungsgemäßer Vorrichtung,
- Fig. 3: die Abgasturbine eines Abgasturboladers (= bei zweistufigem Abgasturbolader dessen Hochdruckturbine) mit Teilen der erfindungsgemäßen Vorrichtung gemäß einer ersten Ausführungsform derselben,
- Fig. 4: die Abgasturbine eines Abgasturboladers (= bei zweistufigem Abgasturbolader dessen Hochdruckturbine) mit Teilen der erfindungsgemäßen Vorrichtung gemäß einer zweiten Ausführungsform derselben,
- Fig. 5: eine Ansicht des Eintrittsbereiches einer einflutig ausgebildeten Abgasturbine,
- Fig. 6: eine Ausführungsform für einen Schaltmodul im Schnitt, der mehrere Teile der erfindungsgemäßen Vorrichtung in sich vereinigt und einer einflutig ausgebildeten Abgasturbine wie jener gemäß Fig. 5 zugeordnet ist,
- Fig. 7: eine Ansicht des Eintrittsbereiches einer zweiflutig ausgebildeten Abgasturbine,
- Fig. 8: eine weitere Ausführungsform für einen Schaltmodul, der ebenfalls mehrere Teile der erfindungsgemäßen Vorrichtung in sich vereinigt und einer zweiflutig ausgebildeten Abgasturbine wie jener gemäß Fig. 7 zugeordnet ist,
- Fig. 9: den Schaltmodul gemäß Fig. 6 in Perspektivansicht auf seiner dem Turbineneintritt zugewandten Seite,
- Fig. 10: den Schaltmodul von Fig. 8 in Perspektivansicht auf seiner dem Turbineneintritt zugewandten Seite, und
- Fig. 11: die Abgasturbine gemäß Fig. 3 vereinigt mit dem Schaltmodul gemäß Fig. 8, 10 und schematisch ergänzt um eine betriebssteuernde Einrichtung.

Die erfindungsgemäße Vorrichtung ist einer mehrzylindrigen Brennkraftmaschine 1, insbesondere Dieselmotor, eines Fahrzeugs zugeordnet, bei dem es sich um ein beliebiges motorbetriebenes Landfahrzeug, wie Lastkraftwagen, Omnibus oder sonstiges Nutzfahrzeug, aber auch einen Pkw, ein Schienenfahrzeug oder ein Wasserfahrzeug handeln kann.

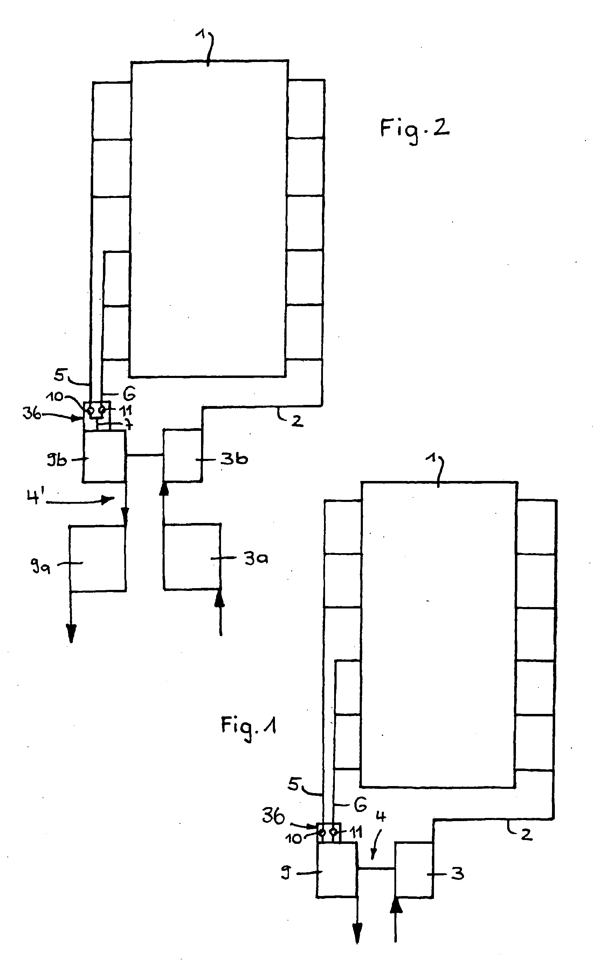

Die Zylinder bzw. Brennräume der Brennkraftmaschine 1 kommunizieren über gesteuerte Einlassventile und anschließende Einlasskanäle mit einer Ladeluftleitung 2, die entweder vom Verdichter 3 eines einstufigen Abgasturboladers 4 (siehe Fig. 1) oder den Verdichtern 3a, 3b eines zweiflutigen Abgasturboladers 4' (siehe Fig. 2) mit verdichteter Ladeluft versorgbar ist. Im Fall der Zweistufigkeit gemäß Fig. 2 ist der Verdichter der Niederdruckstufe mit 3a und der Verdichter der Hochdruckstufe mit 3b bezeichnet. Die Zylinder bzw. Brennräume der Brennkraftmaschine 1 kommunizieren außerdem über gesteuerte Auslassventile und anschließende Auslasskanäle gruppenweise zusammengefasst mit jeweils einem von zwei Abgassammelsträngen 5, 6. Über jeden dieser beiden Abgassammelstränge 5, 6 ist das Abgas aus der angeschlossenen Gruppe von Zylindern entweder über einen gemeinsamen Endkanal 7 (siehe Fig. 2) einem Einlass 8 einer einflutigen Abgasturbine 9 bzw. 9a oder jeweils einem Einlass 8a, 8b einer zweiflutigen Abgasturbine 9 eines Abgasturboladers 4 bzw. 4' zuführbar. Bei einem zweiflutigen Abgasturbolader 4' (siehe Fig. 2) ist die Abgasturbine der Niederdruckstufe mit 9a und die Abgasturbine der Hochdruckstufe mit 9b bezeichnet.

In jedem der beiden Abgassammelstränge 5, 6 ist eine Absperrklappe 10, 11 derart angeordnet und einstellbar, dass der zugehörige Abgassammelstrang 5 bzw. 6 während eines Motorbremsbetriebes vollständig absperrbar ist.

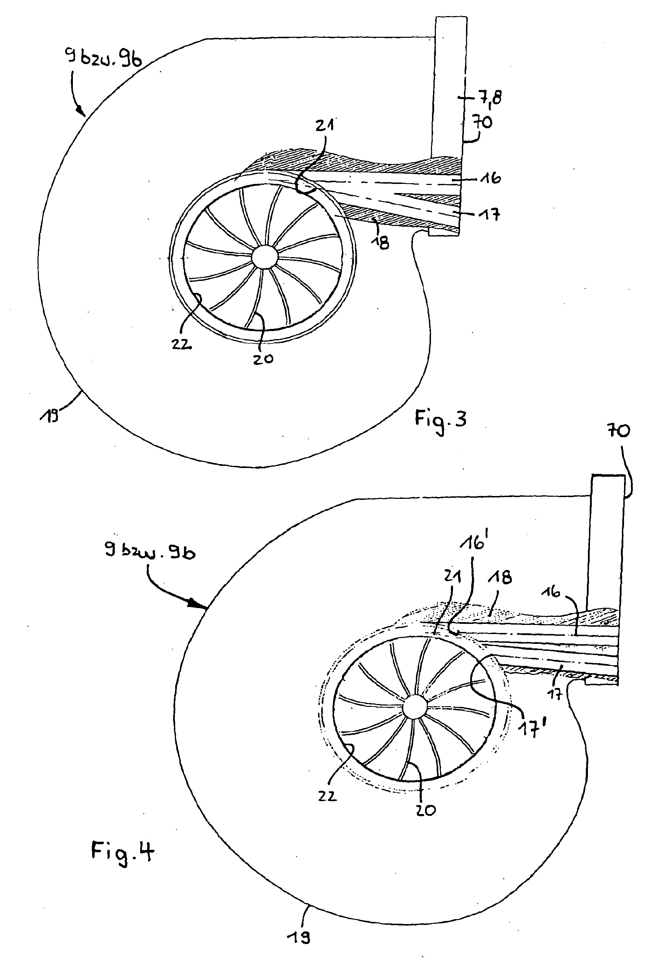

Von jedem Abgassammelstrang 5, 6 zweigt strömungsmäßig vor dem durch die Absperrklappe 10 bzw. 11 absperrbaren Bereich eine Bypassleitung 12 bzw. 13 ab, von denen jede mit einer turbinengehäuseinternen Düsenbohrung 16 bzw. 17 kommuniziert. Diese Düsenbohrungen 16, 17 sind in einem Wandabschnitt 18 des Turbinengehäuses 19 der Abgasturbine 9 eines einstufigen Abgasturboladers 4 bzw. Abgasturbine 9b der Hochdruckstufe eines zweistufigen Abgasturboladers 4' ausgebildet, und zwar in einer zur Achse des Turbinenrades 20 senkrechten Ebene. In dieser Ebene können die beiden Düsenbohrungen entweder a) parallel mit geringem Abstand nebeneinander verlaufen und somit jeweils einen zum anderen benachbarten Austritt 16' bzw. 17' (siehe Fig. 4) haben, oder b) in spitzem Winkel zueinander verlaufen, ineinander übergehen und in einen gemeinsamen Austritt 21 haben. In jedem Fall münden die beiden Düsenbohrungen 16, 17 in ihrer Ebene im Fall a) über jeweils ihre separaten Austritte 16', 17' und im Fall b) über ihren gemeinsamen Austritt 21 tangential auf den Außenbereich des Turbinenrades 20 gerichtet in die Turbinenkammer 22 der Abgasturbine 9 bzw. 9b aus.

Die Düsenbohrungen 16, 17 selbst können entweder zylindrisch oder zum jeweiligen Austritt 16' bzw. 17' bzw. 21 hin leicht konisch ausgebildet sein. Beide Düsenbohrungen 16, 17 sind vorzugsweise gleich ausgebildet, könnten gegebenenfalls aber auch mit unterschiedlichen Durchmessern oder Konuswinkeln realisiert sein.

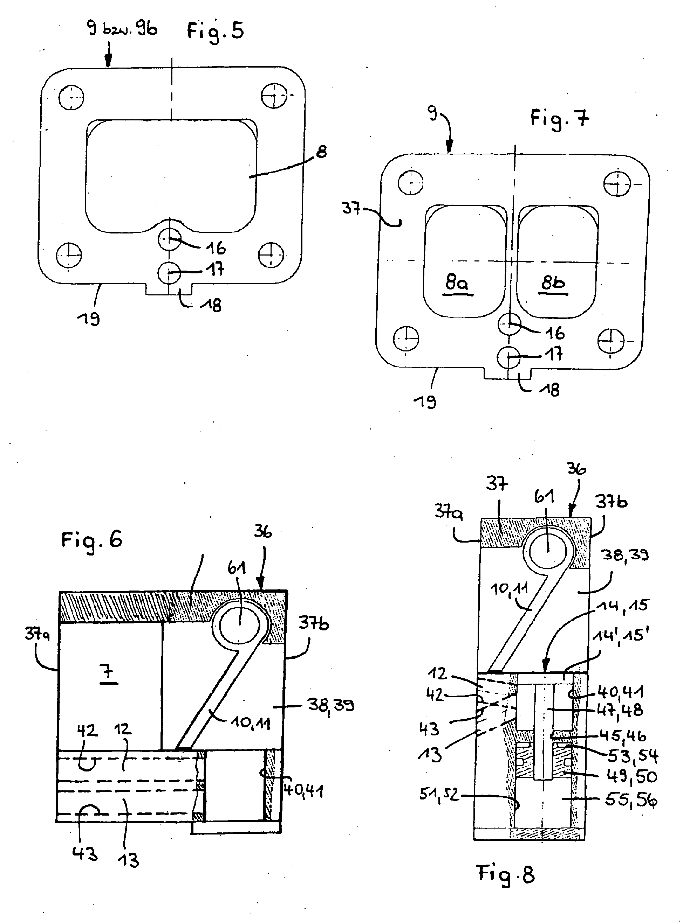

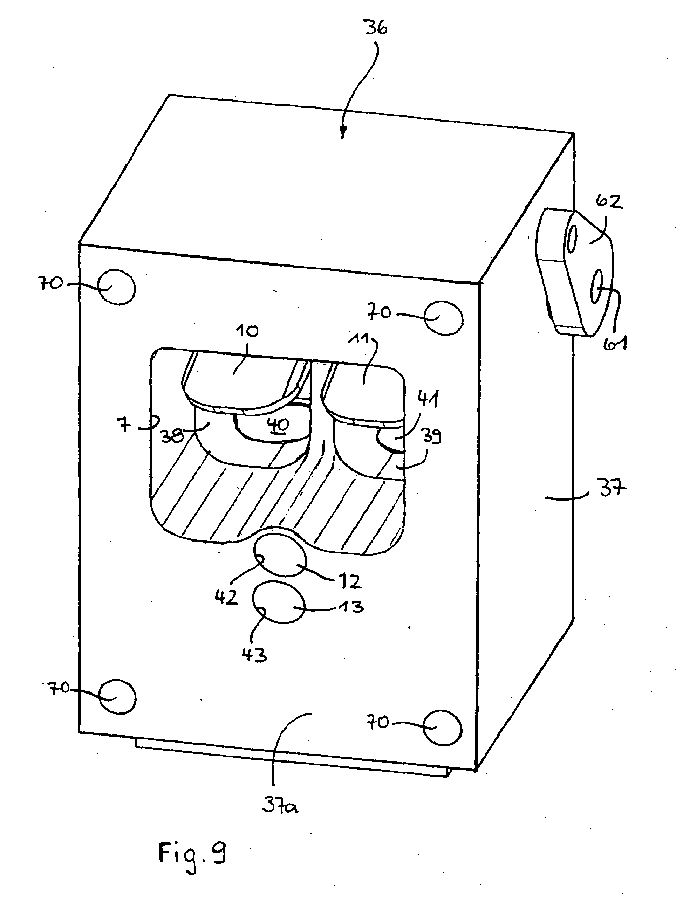

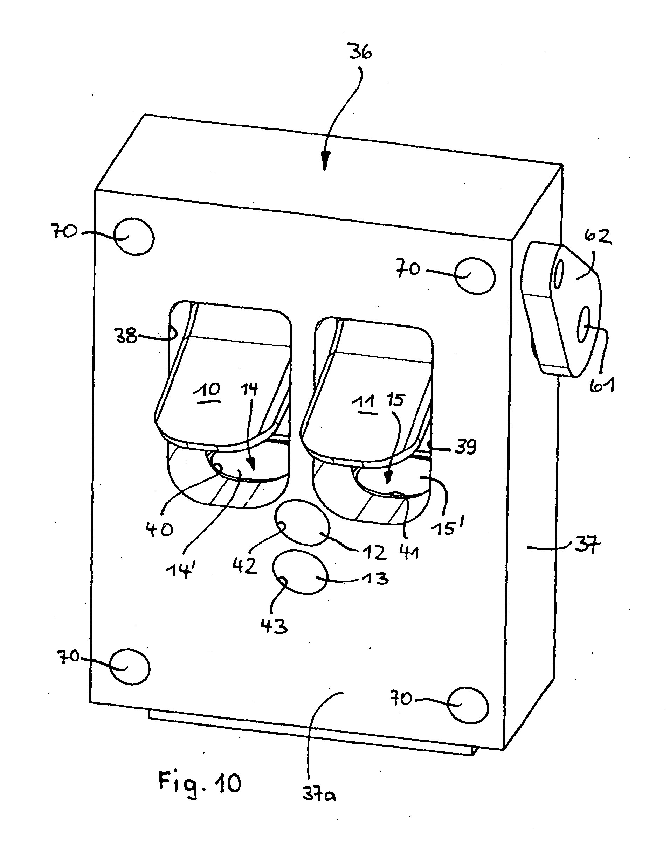

Die Verbindung zwischen den beiden Abgassammelsträngen 5, 6 und den Düsenbohrungen 16, 17 kann entweder ungesteuert über permanent durchlässige Bypasskanäle 12, 13 (siehe z. B. Fig. 6, 9) oder, erfindungsgemäß, gesteuert über je ein steuerbares Ventil 14 bzw. 15 (siehe Fig. 8, 10) in der Bypassleitung 12 bzw. 13 hergestellt sein. Mit diesen Ventilen 14, 15 ist es möglich, jede der beiden Bypassleitungen 12, 13 abzusperren oder zwecks Umgehung der sich in Absperrposition befindlichen Absperrklappe 10 bzw. 11 auf Durchlass zu schalten.

Auf diese Weise ist es möglich, während eines Motorbremsbetriebes nach Schließen der Absperrklappen 10, 11 aus dem in den abgesperrten Abgassammelsträngen 5, 6 aufgestauten Abgas über die Bypassleitungen 12, 13 zwei Abgasteilströme abzuzweigen, welche dann über die Düsenbohrungen 16, 17 entweder in Form von zwei benachbarten Abgasstrahlen oder zu einem Abgasstrahl vereinigt mit hohem Druck und hoher Geschwindigkeit auf die Laufschaufeln des Turbinenrades 20 treffen, wodurch der Abgasturbolader 4 bzw. 4' beschleunigt antreibbar und resultierend hieraus komprimierte Luft den Brennräumen der Brennkraftmaschine - dort bremsleistungssteigernd wirksam - zuführbar ist.

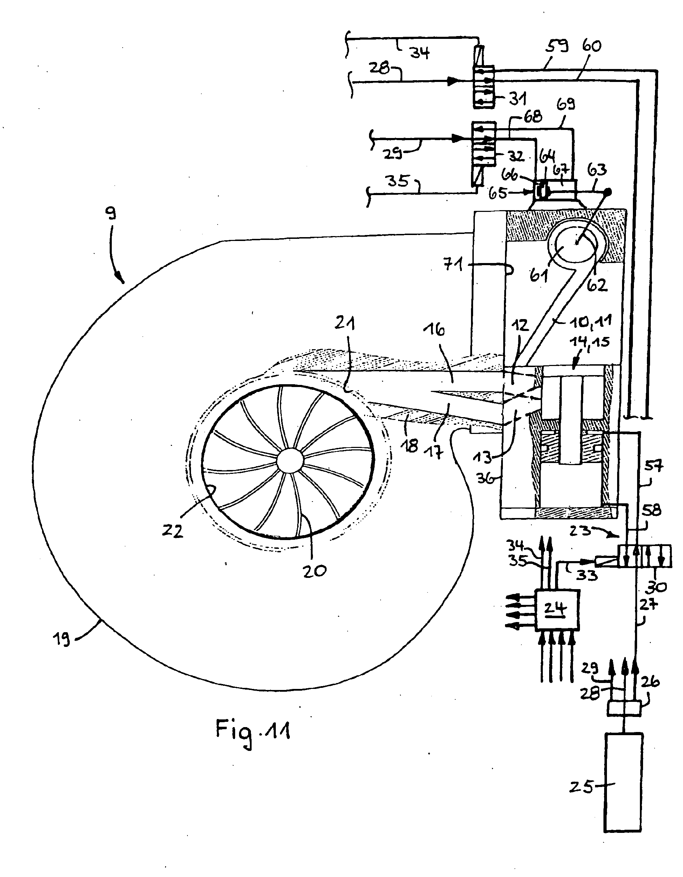

Die beiden steuerbaren Ventile 14, 15 sind - sofern vorgesehen - vorzugsweise mittels elektro-pneumatischer oder elektro-magnetischer Stellvorrichtungen 23 betätigbar, die - wie Fig. 11 zeigt - ihre Steuerbefehle von einer Steuerelektronik 24 erhalten, bei der es sich um ein selbständiges Gerät oder einen Bordcomputer oder Fahrzeugsführungsrechner des Fahrzeugs handeln kann. In dieser Steuerelektronik 24 ist eine Steuerstrategie für das Öffnen, Offenhalten und Schließen der beiden Ventile 14, 15 datenmäßig abgelegt bzw. abgespeichert. Diese Steuerstrategie ist vorzugsweise dahingehend ausgelegt, dass die beiden Ventile 14, 15 zu Beginn eines Motorbremsbetriebes oder zeitlich ein gewisses Maß danach bei Erkennen eines erhöhten Motorbremsbedarfs auf Durchlass gestellt und bei Unterschreiten einer vorgegebenen Motordrehzahl wieder in Absperrstellung überführt werden. Die erfindungsgemäße Vorrichtung ermöglicht in der vorgenannten Ausbaustufe aber auch Steuer- und Regelungseingriffe außerhalb des Motorbremsbetriebes in bestimmten Motornormalbetriebsphasen. Beispielsweise kann die in der Steuerelektronik 24 abgelegte Steuerstrategie auch dahingehend ausgelegt sein, dass bei offenen Absperrklappen 10, 11, also durchlässigen Abgassammelsträngen 5, 6, in bestimmten Motorlast- und/oder -drehzahlbereichen durch gezieltes Öffnen, Offenhalten und wieder Schließen der Ventile 14, 15 - und damit einhergehend einer gezielten Einleitung eines Gasstrahles bzw. zweier Gasstrahlen in die Turbinenkammer 22 zusätzlich zu den beiden normalen Abgasvolumenströmen (aus 5 und 6) - eine Turbinendrehzahländerung ähnlich wie mit einer variablen Turbinengeometrie erzielbar ist.

Grundsätzlich können die beiden Ventile 14, 15 und die zugehörigen Stellvorrichtungen 23 derart ausgelegt sein, dass die Bypassleitungen 12, 13 durch die Ventile 14, 15 nicht nur auf- und zusteuerbar, sondern auch noch deren wirksamer Durchlassquerschnitt beeinflussbar ist.

Nachstehend ist auf Details der in den Figuren dargestellten Ausführungsversionen der erfindungsgemäßen Vorrichtung näher eingegangen.

In beiden Ausführungsversionen gemäß Fig. 6, 9 bzw. 8, 10, 11 sind die beiden Absperrklappen 10, 11 miteinander mechanisch gekoppelt und synchron durch eine elektropneumatische Stellvorrichtung 23 betätigbar, die etwa jenen entspricht, mit denen die Ventile 14, 15 des Ausführungsbeispiels gemäß Fig. 8, 10, 11 betätigbar sind. Zentrale Druckluftquelle ist dabei in beiden Ausführungsvarianten ein fahrzeuginterner Druckluftbehälter 25, der von einem Kompressor nach Bedarf gespeist wird. Wie Fig. 11 zeigt, ist ausgangs des Druckluftbehälters 25 ein Mehrkreisschutzventil 26 gegeben, von dessen Ausgängen Druckluftleitungen 27, 28, 29 abgehen.

Im Fall des Ausführungsbeispiels gemäß Fig. 8, 10, 11 werden alle drei Druckluftleitungen 27, 28, 29 benötigt. Im Fall des Ausführungsbeispiels gemäß Fig. 6, 9 dagegen ist nur die Druckleitung 29 in Verbindung mit der Erfindung von Interesse.

Im Fall des Ausführungsbeispiels gemäß Fig. 8, 10, 11 führt die Druckluftleitung 27 zu einem Durchlass-/Absperrventil 30 als Teil der Stellvorrichtung 23 für das Ventil 14 und die Druckluftleitung 28 führt zu einem Durchlass-/Absperrventil 31, das identisch zu jenem mit 30 bezeichneten ist und ebenfalls ein Teil der Stellvorrichtung 23 für das Ventil 15 bildet. Die Druckluftleitung 29 führt zu einem Durchlass-/Absperrventil 32, das ein Teil der elektro-pneumatischen Stellvorrichtung für die synchron betätigbaren Absperrklappen 10, 11 bildet. Die Elektromagneten der Durchlass-/Absperrventile 30, 31, 32 erhalten ihre Stellbefehle von der Steuerelektronik 24 über entsprechende elektrische Steuerleitungen 33, 34, 35. Die beiden Ausgänge eines jeden Durchlass-/Absperrventils 30, 31, 32 sind mit jeweils einem Druckraum vor und hinter einem Stellkolben verbunden, mit dem das jeweilige Ventil 14, 15 bzw. ein mit den Absperrklappen 10, 11 verbundenes Stellorgan mittelbar z. B. über eine Stange betätigbar ist. Hierauf ist weiter hinten noch näher eingegangen.

In bevorzugter Ausgestaltung ist bei beiden Ausführungsvarianten gemäß Fig. 6, 9 und 8, 10, 11 ein Teil der erfindungsgemäßen Vorrichtung in einem Schaltmodul 36 zusammengefasst, der das turboladerseitige Ende der Abgassammelstränge 5, 6 bildet. Der Schaltmodul 36 weist generell eine Grundstruktur 37 mit einer vorderen, laderzugewandten Stirnfläche 37a und einer hierzu parallelen laderabgewandten Stirnfläche 37b auf. In der Grundstruktur 37 des Schaltmoduls 36 der Ausführungsform gemäß Fig. 6, 9 sind nebeneinander zwei parallele Abgaskanäle 38, 39 gegeben, von denen jeder eingangsseitig mit einem der Abgassammelstränge 5, 6 kommuniziert und andererseits in den einflutigen Abgaskanal 7 ausmündet, der ebenfalls in der Grundstruktur 37 des Schaltmoduls 36 ausgebildet ist.

Bei der Ausführungsform gemäß Fig. 8, 10, 11 sind in der Grundstruktur 37 des Schaltmoduls nebeneinander ebenfalls zwei, hier aber von hinten nach vorne durchgängige Abgaskanäle 38, 39 gegeben, von denen jeder eingangsseitig mit einem der Abgassammelstränge 5, 6 und ausgangsseitig mit einem der Turbineneinlässe 8a, 8b kommuniziert.

In jedem der Abgaskanäle 38, 39 ist generell, also in beiden Ausführungsversionen, eine der Absperrklappen 10, 11 eingebaut, derart, dass er durch diese vollständig absperrbar ist.

Ferner sind in die Struktur 37 des Schaltmoduls 36 auch die Bypassleitungen 12, 13, und im Fall des Beispiels gemäß Fig. 8, 10, 11 außerdem auch die diese auf- und zuschließenden Ventile 14, 15 sowie zumindest Teile der jeweils zugehörigen Stellvorrichtungen 23 integriert.

Die Bypassleitungen 12, 13 sind dabei in der Grundstruktur 37 des Schaltmoduls 36 wie folgt realisiert. Von jedem der beiden Abgaskanäle 38, 39 zweigt im Wesentlichen senkrecht stehend dazu entweder nach oben oder - wie in der Zeichnung dargestellt - nach unten eine Sacklochbohrung 40 bzw. 41 als erster Teilabschnitt der Bypassleitung 12 bzw. 13 ab. Von jeder Sacklochbohrung 40 bzw. 41 zweigt als weiterer Teilabschnitt der Bypassleitung 12 bzw. 13 eine an der Vorderseite 36a der Schaltmodul-Grundstruktur 37 ausmündende Bohrung 42, 43 ab, die mit einer der beiden turbinengehäuseinternen Düsenbohrungen 16 bzw. 17 (42 mit 16 und 43 mit 17) kommuniziert.

Im Fall des Ausführungsbeispiels gemäß Fig. 8, 10, 11 ist in der Sacklochbohrung 40, 41, also dem ersten Abschnitt der Bypassleitung 12 bzw. 13, das zugehörige Ventil 14 bzw. 15 mit seinem Ventilteller 14' bzw. 15' zwischen einer Absperrposition (wie in den Fig. 8, 10 und 11 gezeigt) und einer in die Sacklochbohrung 40 bzw. 41 eingefahrenen Durchlassposition hin und her bewegbar und gegebenenfalls auch in Zwischenstellungen einstellbar. Der Ventilteller 14' bzw. 15' des Ventils 14 bzw. 15 ist über einen koaxial in einer schaltmodulgrundstrukturinternen Bohrung 45, 46 geführten Schaft 47, 48 an ein Stellorgan 49, 50 der zugehörigen Stellvorrichtung 23 angekoppelt. Bei diesem Stellorgan 49 bzw. 50 handelt es sich im dargestellten Beispiel einer elektro-pneumatischen Stellvorrichtung 23 um einen Kolben, der innerhalb des Schaltmoduls 36 in einer in dessen Grundstruktur 36' zur Sacklochbohrung 40 bzw. 41 koaxialen Kammer 51 bzw. 52 einen vorderen Druckraum 53 bzw. 54 von einem hinteren Druckraum 55 bzw. 56 trennt. Die beiden dem Ventil 14 zugehörigen Druckräume 53, 55 sind über Druckleitungen 57, 58 mit dem Durchlass-/Absperrventil 30 verbunden. Die beiden dem Ventil 15 zugehörigen Druckräume 54, 56 sind über Druckleitungen 59, 60 mit dem Durchlass-/Absperrventil 31 verbunden. Diese Druckräume der beiden Ventile 14 bzw. 15 sind für deren Betätigung in der einen oder anderen Richtung je nach Schaltstellung des zugehörigen Durchlass-/Absperrventils 30, 31 wechselweise druckluftbeaufschlagbar oder druckentlastbar.

Die beiden Absperrklappen 10, 11 sind in beiden Ausführungsbeispielen gemäß Fig. 6, 9 bzw. 8, 10, 11 für synchrone und gleichwirkende Betätigung auf einer Stellachse 61 befestigt, die in einer die Grundstruktur 37 des Schaltmoduls 36 quer durchsetzenden Aufnahmebohrung drehbar gelagert und über einen außenseitig angeordneten Hebel 62 mit einer Kolbenstange 63 gekoppelt ist, an deren freiem Ende ein Kolben 64 sitzt, der in einem pneumatischen Druckzylinder 65 einen vorderen Druckraum 66 von einem hinteren Druckraum 67 trennt. Die beiden Druckräume 66, 67 des Druckzylinders 65 sind über Druckleitungen 68, 69 mit dem Durchlass-/Absperrventil 32 verbunden, über das sie für Verstellung des Kolbens 64 und damit der Absperrklappen 10, 11 in der einen oder anderen Richtung wechselweise druckluftbeaufschlagbar oder druckentlastbar sind. Der Druckzylinder 65 ist in geeigneter Weise außen an der Grundstruktur 37 des Schaltmoduls 36 befestigt.

Der Schaltmodul 36 ist als komplett vormontierte Baueinheit zwischen einem stirnseitigen Flansch am Ende der Abgassammelstränge 5, 6 und einem am Einlassbereich der Abgasturbine 9 bzw. 9b gegebenen Anschlussflansch 71 einzubauen und dort mittels mehrerer Schraubverbindungen, welche in der Grundstruktur 37 sowie den Flanschen ausgebildete Befestigungslöcher 70 durchdringen, zu befestigen.

## Patentansprüche

1. Vorrichtung zur Steigerung der Bremsleistung einer mehrzylindrigen Brennkraftmaschine eines Fahrzeugs während des Motorbremsbetriebes, die eine motorinterne Motorbremsvorrichtung, einen ein- oder mehrstufigen Abgasturbolader (4, 4') mit (je Stufe) einer Abgasturbine (9) und einem Ladeluftverdichter (3) sowie zwei Abgassammelstränge (5, 6) aufweist, über die jeweils das aus mehreren Zylindern ausgestoßene Abgas gruppenweise zusammengefasst einem Turbinen-Einlass (8; 8a, 8b) zuführbar ist, wobei
- jeder Abgassammelstrang (5, 6) durch eine Absperrklappe (10, 11) während des Motorbremsbetriebes vollständig absperrbar ist,
- vom absperrbaren Bereich jedes Abgassammelstranges (5, 6) eine Bypassleitung (12, 13) abzweigt und
- jede Bypassleitung (12, 13) mit einer Düsenbohrung (16, 17) kommuniziert, die in einer Turbinenwand (18) der Abgasturbine (9; 9b) ausgebildet ist, **dadurch gekennzeichnet, dass** - jede Bypassleitung (12, 13) durch ein steuerbares Ventil (14, 15) absperrbar oder auf Durchlass schaltbar ist,
- die beiden Düsenbohrungen (16, 17) in einer zur Achse des Turbinenrades (20) senkrechten Ebene entweder
a) parallel nebeneinander verlaufend und über je einen zum anderen benachbarten Austritt (16', 17'), oder
b) in spitzem Winkel zueinander verlaufend sowie ineinander übergehend und dann über einen gemeinsamen Austritt (21)
tangential auf den Außenbereich des Turbinenrades (20) gerichtet in die Turbinenkammer (22) ausmünden,
- während eines Motorbremsbetriebes aus dem in den abgesperrten Abgassammelsträngen (5, 6) aufgestauten Abgas über die Bypassleitungen (12, 13) zwei Abgasteilströme abzweigbar und diese dann über die Düsenbohrungen (16, 17) entweder in Form von zwei Abgasstrahlen oder zu einem Abgasstrahl vereinigt mit hohem Druck und hoher Geschwindigkeit auf die Laufschaufeln des Turbinenrades (20) treffen und solchermaßen der Turbolader (4, 4') beschleunigt antreibbar sowie hieraus resultierend komprimierte Luft den Brennräumen der Brennkraftmaschine (1) - dort bremsleistungssteigemd wirksam - zuführbar ist.

2. Vorrichtung nach Anspruch 1, **dadurch gekennzeichnet, dass** die beiden steuerbaren Ventile (14, 15) jeweils mittels einer elektro-pneumatischen oder elektro-magnetischen Stellvorrichtung (23) betätigbar sind, die ihre Steuerbefehle von einer Steuerelektronik (24), insbesondere Bordcomputer oder Fahrzeugführungsrechner, erhält.

3. Vorrichtung nach Anspruch 2, **dadurch gekennzeichnet, dass** in der Steuerelektronik (24) eine Steuerstrategie für das Öffnen, Offenhalten und Schließen der beiden Ventile (14, 15) datenmäßig abgelegt bzw. abgespeichert ist.

4. Vorrichtung nach Anspruch 3, **dadurch gekennzeichnet, dass** die in der Steuerelektronik (24) abgelegte Steuerstrategie dahingehend ausgelegt ist, dass die beiden Ventile (14, 15) zu Beginn einer Motorbremsung oder zeitlich versetzt danach bei Erkennen eines erhöhten Motorbremsbedarfs auf Durchlass gestellt und bei Unterschreiten einer vorgegebenen Motordrehzahl wieder in Absperrstellung überführt werden.

5. Vorrichtung nach Anspruch 3, **dadurch gekennzeichnet, dass** die in der Steuerelektronik (24) abgelegte Steuerstrategie auch für Einflussnahmen auf den Turbinenbetrieb außerhalb von Motorbremsphasen, also Motornormalbetrieb ausgelegt ist, dahingehend, dass bei offenen Absperrklappen (10, 11) und durchlässigen Abgassträngen (5, 6) in bestimmten Motorlast- und/oder -drehzahlbereichen durch gezieltes Öffnen, Offenhalten und wieder Schließen der Ventile (14, 15) und damit einhergehend einem gezielten Einleiten eines Gasstrahles in die Abgasturbine (9) zusätzlich zu den beiden normalen Abgasvolumenströmen eine Turboladerdrehzahländerung im Sinne einer variablen Turbinengeometrie herbeiführbar ist.

6. Vorrichtung nach einem oder mehreren der Ansprüche 1 bis 5, **dadurch gekennzeichnet, dass** die beiden Ventile (14, 15) und die zugehörigen Stellvorrichtungen (23) derart ausgelegt sind, dass die Bypassleitungen (12, 13) durch die Ventile (14, 15) nicht nur auf- und zusteuerbar, sondern auch deren wirksamer Durchlassquerschnitt beeinflussbar, drosselbar oder variabel einstellbar ist.

7. Vorrichtung nach Anspruch 1, **dadurch gekennzeichnet, dass** mehrere Vorrichtungsteile in einem kompakten Schaltmodul (36) zusammengefasst sind, der als vorgefertigte und vormontierte Baueinheit zwischen einem turbineneintrittsseitigen Flansch (71) und einem endseitig an den beiden Abgassammelsträngen (5, 6) angeordneten Flansch einbaubar ist.

8. Vorrichtung nach Anspruch 7, **dadurch gekennzeichnet, dass** in einer Grundstruktur (37) des Schaltmoduls (36) nebeneinander zwei Abgaskanäle (38, 39) gegeben sind, von denen jeder eingangs mit einem Abgassammelstrang (5 bzw. 6) kommuniziert und ausgangs in einem grundstrukturintern gemeinsame Abgaskanal (7) ausmündet, dass in jedem der Abgaskanäle (38, 39) eine Absperrklappe (10 bzw. 11) eingebaut ist, und dass in der Grundstruktur (37) des Schaltmoduls (36) außerdem auch die Bypassleitungen (12, 13) ausgebildet sind.

9. Vorrichtung nach Anspruch 8, **dadurch gekennzeichnet, dass** jede der Bypassleitungen (12, 13) in der Grundstruktur (37) des Schaltmoduls (36) zwei Teilabschnitte aufweist, wobei der erste Teilabschnitt durch eine von einem Abgaskanal (38, 39) im Wesentlichen senkrecht nach oben oder unten abzweigende Sacklochbohrung (40 bzw. 41) gebildet ist und wobei der nachfolgende zweite Teilabschnitt durch eine von der jeweiligen Sacklochbohrung (40 bzw. 41) abgehende und an der vorderen, turbinenseitigen Stirnseite (37a) der Schaltmodul-Grundstruktur (37) ausmündende Bohrung (42, 43) gebildet ist, die mit einer der beiden turbinengehäuseinternen Düsenbohrungen (16 bzw. 17) kommuniziert.

10. Vorrichtung nach Anspruch 7, **dadurch gekennzeichnet, dass** in einer Grundstruktur (37) des Schaltmoduls (36) nebeneinander zwei durchgehende Abgaskanäle (38, 39) gegeben sind, von denen jeder eingangs mit einem Abgassammelstrang (5 bzw. 6) und ausgangs mit einem Turbineneinlass (8a, 8b) kommuniziert, dass in jedem der Abgaskanäle (38, 39) eine Absperrklappe (10 bzw. 11) eingebaut ist, und dass in der Grundstruktur (37) des Schaltmoduls (36) außerdem auch die Bypassleitungen (12, 13) und die diese auf- und zusteuernden Ventile (14, 15) sowie zumindest Teile der zugehörigen Stellvorrichtungen (23, 65) integriert sind.

11. Vorrichtung nach Anspruch 10, **dadurch gekennzeichnet, dass** in der Grundstruktur (37) des Schaltmoduls (36) von jedem Abgaskanal (38, 39) im Wesentlichen senkrecht nach oben oder unten eine Sacklochbohrung (40, 41) als erster Teilabschnitt einer Bypassleitung (12 bzw. 13) abzweigt, in der das zugehörige Ventil (14, 15) mit seinem Ventilteller (14', 15') zwischen einer Absperrposition und einer Durchlassposition hin und her bewegbar und gegebenenfalls auch in Zwischenstellungen einstellbar ist, dass von jeder Sacklochbohrung (40, 41) jeweils als weiterer Teilabschnitt einer Bypassleitung (12 bzw. 13) eine an der vorderen Stirnseite (37a) der Schaltmodul-Grundstruktur (37) ausmündende Bohrung (42, 43) abgeht, die mit einer der beiden turbinengehäuseinternen Düsenbohrungen (16, 17) kommuniziert, und dass der Ventilteller (14', 15') jedes Ventils (14, 15) über einen koaxial in einer Bohrung (45, 46) in der Grundstruktur (37) des Schaltmoduls (36) geführten Schaft (47, 48) an ein Stellorgan (49, 50) der zugehörigen Stellvorrichtung (23) angekoppelt ist.

12. Vorrichtung nach Anspruch 11, **dadurch gekennzeichnet, dass** der Ventilschaft (47, 48) jedes Ventils (14, 15) im Falle einer elektro-pneumatischen Stellvorrichtung (23) an einem ein Teil derselben bildenden Stellkolben (49, 50) angeschlossen ist, der in einer in der Grundstruktur (37) hinter der Sacklochbohrung (40, 41) getrennt und koaxial zu dieser ausgebildeten Steuerkammer (51, 52) einen vorderen Druckraum (53, 54) von einem hinteren Druckraum (55, 56) trennt, welche Druckräume (55, 56) jeweils über eine Druckleitung (57, 58; 59, 60) an einem Ausgang eines Durchlass-/Absperrventils (30, 31) angeschlossen sind, dessen einer Eingang mit einer Druckluftquelle (25) und dessen anderer Eingang mit einer Atmosphäre verbunden ist, so dass die Druckräume je nach Schaltstellung des jeweiligen Durchlass-/Absperrventils (30, 31) für Betätigung des Ventils (14, 15) in der einen oder anderen Richtung wechselweise druckluftbeaufschlagbar bzw. druckentlastbar sind.

13. Vorrichtung nach Anspruch 8, **dadurch gekennzeichnet, dass** die beiden Absperrklappen (10, 11) für synchrone und gleichwirkende Betätigung auf einer Stellachse (61) befestigt sind, die in einer die Grundstruktur (37) des Schaltmoduls (36) querdurchsetzenden Aufnahmebohrung drehbar gelagert und über einen außenseitig angeordneten Hebel (62) mit einer Kolbenstange (63) gekoppelt ist, an deren anderem freien Ende ein Kolben (64) angeordnet ist, der in einem pneumatischen Druckzylinder (65) einen vorderen Druckraum (66) von einem hinteren Druckraum (67) trennt, wobei die beiden Druckräume (66, 67) über Druckleitungen (68, 69) mit den Ausgängen des Durchlass-/Absperrventils (32) verbunden, über das sie je nach dessen Schaltstellung für Verstellung des Kolbens (64) und damit der Absperrklappen (10, 11) in der einen oder anderen Richtung wechselweise druckluftbeaufschlagbar oder druckentlastbar sind.

14. Vorrichtung nach Anspruch 13, **dadurch gekennzeichnet, dass** der Druckzylinder (65) außen an der Grundstruktur (37) des Schaltmoduls (36) befestigt ist.

15. Vorrichtung nach Anspruch 1, **dadurch gekennzeichnet, dass** die Düsenbohrungen (16, 17) zylindrisch oder zu ihrem Austritt (16', 17', 21) hin leicht konisch ausgebildet sind.

## Claims

1. Fixture for increasing the brake power of a multi-cylinder internal combustion engine of a vehicle during engine brake operation, featuring an engine brake fixture within the engine, a single- or multi-stage turbo charger (4, 4') with an exhaust turbine (9), a charge-air compressor (3), as well as two exhaust gas collecting lines (5, 6) per stage. These lines allow the exhaust gas that is emitted from several cylinders, collected by groups, to be fed into a turbine intake (8; 8a, 8b) each time, whereby:
- Each exhaust gas collecting line (5, 6) can be completely shut off by a shut-off flap (10, 11) during engine brake operation,
- A bypass line (12, 13) leads off from the shut-off area of each exhaust gas collecting line (5, 6), and
- Each bypass line (12, 13) interacts with a nozzle bore (16, 17), which is built into a turbine wall (18) of the exhaust turbine (9, 9b), **characterised by** each bypass line (12, 13) being able to be shut off or switched open by a controllable valve (14, 15),
- Both nozzle bores (16, 17), in a vertical plane to the turbine axle (20), either
a) end in the turbine chamber (22) at a tangent to the outer area of the turbine (20), whilst running parallel to one another and via a respective outlet adjacent to its counterpart (16', 17'), or
b) end in the turbine chamber (22) at a tangent to the outer area of the turbine (20) whilst running at an acute angle to one another as well as flowing into one another and then passing via a common outlet (21),
- During engine brake operation, two exhaust gas flows can be led off from the exhaust gas retained in the shut-off exhaust gas collecting lines (5, 6) by means of the bypass lines (12, 13). These are then brought together by means of the nozzle bores (16, 17), either in the form of two exhaust gas streams or one exhaust gas stream. These then encounter the turbine blades (20) under high pressure and at high speed in such a way as to speed up the turbo charger (4, 4') and also to allow the resulting compressed air from this to be fed into the combustion chambers of the internal combustion engine (1), where it increases the brake power.

2. Fixture as per claim 1, **characterised by** both controllable valves (14, 15) each being operable by means of an electro-pneumatic or electro-magnetic adjustable device (23) and obtaining their commands from control electronics (24), in particular an onboard computer or vehicle management computer.

3. Fixture as per claim 2, **characterised by** a control strategy for opening both valves (14, 15), keeping them open and closing them, being stored or saved in the control electronics (24) in the form of data.

4. Fixture as per claim 3, **characterised by** the control strategy stored in the control electronics (24) being configured in such a way as to open both valves (14, 15) when engine braking begins or, at a later stage, when a need for increased engine braking is recognised and to shut off both valves (14, 15) again when a predetermined engine speed is not reached.

5. Fixture as per claim 3, **characterised by** the control strategy stored in the control electronics (24) also being configured to influence turbine operation outside engine brake phases i.e. normal engine operation. This has the effect of causing a change in turbo charger speed in addition to both normal exhaust gas volume flows, in the sense of a variable turbine geometry, when the shut-off flaps (10, 11) are open and the exhaust gas lines (5, 6) are permeable in certain engine load and/or engine speed ranges, by means of opening the valves (14, 15), keeping them open and closing them again in a selective manner, accompanied by introducing a gas flow in a selective way into the exhaust gas turbine (9).

6. Fixture as per one or more of claims 1 to 5, **characterised by** both valves (14, 15) and the corresponding adjustable devices (23) being configured in such a way as to not only allow the bypass lines (12, 13) to be opened or closed by the valves (14, 15), but also to allow their effective opening cross section to be influenced, restricted or variably adjusted.

7. Fixture as per claim 1, **characterised by** several fixture parts being combined in a compact shift module (36), which can be fitted, in the form of a pre-manufactured and preassembled unit, between a flange (71) on the turbine intake side and a flange at the end of both exhaust gas collecting lines (5, 6).

8. Fixture as per claim 7, **characterised by** two exhaust ducts (38, 39) being fitted alongside one another in a basic structure (37) of the shift module (36). Each of these ducts interacts with an exhaust gas collecting line (5 or 6) at the inlet and ends in a common exhaust duct (7) within the basic structure at the outlet. Additionally, this fixture is **characterised by** each exhaust duct (38, 39) being fitted with a shut-off flap (10 or 11), and the bypass lines (12, 13) also being built into the basic structure (37) of the shift module (36).

9. Fixture as per claim 8, **characterised by** each of the bypass lines (12, 13) in the basic structure (37) of the shift module (36) featuring two sub-sections. The first of these sub-sections comprises a blind hole bore (40 or 41) leading off from an exhaust duct (38, 39) in a generally vertical upwards or downwards direction. The subsequent second sub-section comprises a bore (42, 43), which leads off from the blind hole bore (40 or 41) respectively and ends at the front side (37a) of the shift module's basic structure (37) on the turbine side. This bore interacts with one of the two nozzle bores (16 or 17) inside the turbine housing.

10. Fixture as per claim 7, **characterised by** two continuous exhaust ducts (38, 39) being fitted alongside one another in a basic structure (37) of a shift module (36). Each of these ducts interacts with an exhaust collecting line (5 or 6) at the inlet and with a turbine inlet (8a, 8b) at the outlet. Additionally, it is **characterised by** a shut-off flap (10 or 11) being fitted into each of the exhaust ducts (38, 39), and also by the bypass lines (12, 13) and the valves (14, 15) designed to open and close the bypass lines, as well as at least parts of the corresponding adjustable devices (23, 65), being integrated into the basic structure (37) of the shift module (36).

11. Fixture as per claim 10, **characterised by** a blind hole bore (40, 41) leading off as the first sub-section of a bypass line (12 or 13) in a generally vertical upwards or downwards direction from each exhaust duct (38, 39) in the basic structure (37) of the shift module (36). In this bore, the corresponding valve (14, 15) with its valve plate (14', 15') can be moved backwards and forwards between a shut-off position and an open position and, if necessary, can also be adjusted to interim positions. This fixture is also **characterised by** an end bore (42, 43) from the front side (37a) of the shift module's basic structure (37) leading off from each blind hole bore (40, 41) as a further sub-section of a bypass line (12 and 13). This bore interacts with one of the two nozzle bores (16, 17) inside the turbine housing. Furthermore, it is **characterised by** the valve plate (14', 15') of each valve (14, 15) being connected to a positioning device (49, 50) of the corresponding adjustable device (23) by means of a shaft (47, 48) coaxially positioned in a bore (45, 46) in the basic structure (37) of the shift module (36).

12. Fixture as per claim 11, **characterised by** the valve shaft (47, 48) of each valve (14, 15) being connected in the case of an electro-pneumatic adjustable device to a section of the actuating piston (49, 50) forming part of the same device. This piston separates a front pressure chamber (53, 54) from a rear pressure chamber (55, 56) in a control chamber (51, 52) arranged separately and in a coaxial manner behind the blind hole bore (40, 41) in the basic structure (37). These pressure chambers (55, 56) are connected respectively to an outlet of an opening/shut-off valve (30, 31) by means of a pressure line (57, 58; 59, 60). One of the inlets of this is connected to a compressed-air source (25) and the other inlet is connected with an atmosphere. This allows the pressure chambers to be subjected to and relieved of compressed air interchangeably for the actuation of the valve (14, 15) in one direction or another, depending on the switch position of the respective opening/shut-off valve (30, 31).

13. Fixture as per claim 8, **characterised by** both shut-off flaps (10, 11) for synchronous and equivalent use being fastened to an adjustment axis (61). This is mounted crosswise in a pivoted manner in a mounting bore in the basic structure (37) of the shift module (36) and is connected to a piston rod (63) by means of a lever (62) affixed externally. A piston (64) is connected to the other free end, which separates a front pressure chamber (66) from a rear pressure chamber (67) in a pneumatic pressure cylinder (65). Both pressure chambers (66, 67) are connected to the outlets of the opening/shut-off valve (32) by means of pressure lines (68, 69). This valve allows the pressure lines to be subjected to and relieved of compressed air interchangeably in one direction or another depending on the switch position for adjusting the piston (64) and thereby also the shut-off flaps (10, 11).

14. Fixture as per claim 13, **characterised by** the pressure cylinder (65) being fastened to the basic structure (37) of the shift module (36) on the outside.

15. Fixture as per claim 1, **characterised by** the nozzle bores (16, 17) having a cylindrical design or being slightly tapered towards their outlet (16', 17', 21).

## Revendications

1. Dispositif pour augmenter la puissance de freinage d'un moteur à combustion interne multicylindre d'un véhicule lors du fonctionnement du frein moteur, présentant un dispositif de frein moteur interne au moteur, un turbocompresseur à un ou à plusieurs étages (4, 4') avec une turbine à gaz d'échappement (9) (par étage) et un compresseur d'air de suralimentation (3) ainsi que deux lignes collectrices des gaz d'échappement (5, 6) par l'intermédiaire desquelles les gaz d'échappement évacués de plusieurs cylindres sont réunis par groupes et dirigés vers une entrée de turbine (8 ; 8a, 8b), auquel cas
- chaque ligne collectrice des gaz d'échappement (5, 6) peut être obturée complètement lors du fonctionnement du frein moteur au moyen d'un clapet d'arrêt (10, 11),
- une conduite by-pass (12, 13) bifurque de la zone obturable de chaque ligne collectrice de gaz d'échappement (5, 6) et
- chaque conduite by-pass (12, 13) communique avec un perçage de buse (16, 17) ménagé dans une paroi dé turbine (18) de la turbine à gaz d'échappement (9 ; 9b), **caractérisé en ce que**
- chaque conduite by-pass (12, 13) peut être commutée en position fermée ou ouverte pour laisser passer les gaz d'échappement au moyen d'une vanne commandable (14, 15),
- les deux perçages de buse (16, 17) débouchent sur la chambre de turbine (22) dans un plan vertical par rapport à l'axe de la roue de turbine (20) soit
a) réalisés en parallèle l'un à côté de l'autre et par l'intermédiaire de sorties (16', 17') avoisinantes l'une par rapport à l'autre, soit
b) réalisés en formant un angle aigu l'un par rapport à l'autre avant de se réunir, puis par l'intermédiaire d'une sortie commune (21) en étant dirigés de manière tangentielle vers la zone extérieure de la roue de turbine (20),
- lors du fonctionnement du frein moteur, deux flux partiels de gaz d'échappement des gaz d'échappement accumulés dans les lignes collectrices des gaz d'échappement fermées (5, 6) pouvant être bifurqués par l'intermédiaire des conduites by-pass (12, 13) sont dirigés par l'intermédiaire des perçages de buse (16, 17), soit sous forme de deux flux de gaz d'échappement, soit réunis en un flux de gaz d'échappement, à pression élevée et à grande vitesse, vers les ailettes mobiles de la roue de turbine (20) entraînant ainsi le turbocompresseur (4, 4') de manière accélérée et amenant par conséquent de l'air comprimé dans les chambres de combustion du moteur à combustion interne (1), ce qui fait augmenter la puissance de freinage fournie par ces chambres de combustion.

2. Dispositif selon la revendication 1, **caractérisé en ce que** chacune des deux vannes commandables (14, 15) peuvent être actionnées au moyen d'un dispositif d'actionnement électropneumatique ou électromagnétique (23), qui reçoit ses instructions de commande par une électronique de commande (24), en particulier par un ordinateur embarqué ou un ordinateur de pilotage de véhicule.

3. Dispositif selon la revendication 2, **caractérisé en ce que** les données de la stratégie de commande d'ouverture, de maintien en position ouverte et de fermeture des deux vannes (14, 15) sont stockées/mémorisées dans l'électronique de commande (24).

4. Dispositif selon la revendication 3, **caractérisé en ce que** la stratégie de commande mémorisée dans l'électronique de commande (24) est configurée de telle manière que les deux vannes (14, 15) soient commutées en position de passage au début d'un freinage avec le frein moteur ou également en différé dans le cas où le système détecte que le frein moteur doit fournir une puissance de freinage plus importante et soient amenées de nouveau en position d'arrêt lorsqu'un régime moteur défini n'est plus atteint.

5. Dispositif selon la revendication 3, **caractérisé en ce que** la stratégie de commande mémorisée dans l'électronique de commande (24) est configurée également pour influencer sur le fonctionnement de la turbine en dehors des phases de fonctionnement du frein moteur, c'est-à-dire lors du fonctionnement normal du moteur, ce qui permet d'atteindre, à clapets d'arrêt (10, 11) ouverts et lignes de gaz d'échappement (5, 6) ouvertes et dans des plages de charge moteur et/ou de régime moteur définies grâce à l'ouverture, au maintien en position ouverte et à la fermeture ciblés des vannes (14, 15), en plus des deux flux volumiques des gaz d'échappement normaux, une modification de la vitesse de rotation du turbocompresseur dans le sens d'une géométrie de turbine variable, conduisant à une admission ciblée d'un flux de gaz d'échappement dans la turbine à gaz d'échappement (9).

6. Dispositif selon une ou plusieurs des revendications 1 à 5, **caractérisé en ce que** les deux vannes (14, 15) et les dispositifs d'actionnement (23) correspondants sont conçus de telle manière que les conduites by-pass (12, 13) ne soient pas seulement ouvrables et fermables au moyen des vannes (14, 15), mais que leur section de passage efficace puisse être également influencée, étranglée ou réglée de manière variable.

7. Dispositif selon la revendication 1, **caractérisé en ce que** plusieurs composants du dispositif sont regroupés dans un module de commande (36) compact qui peut être monté sous forme d'ensemble préfabriqué et prémonté entre un plateau (71) côté entrée de la turbine et un plateau disposé aux extrémités des deux lignes collectrices des gaz d'échappement (5, 6).

8. Dispositif selon la revendication 7, **caractérisé en ce que** deux canaux de gaz d'échappement (38, 39) sont ménagés l'un à côté de l'autre dans une structure de base (37) du module de commande (36), ces canaux communicant, côté entrée, avec une ligne collectrice des gaz d'échappement (5 ou 6) et débouchant, côté sortie, sur un canal de gaz d'échappement (7) commun intégré à la structure de base, **en ce que** chacun des canaux de gaz d'échappement (38, 39) est équipé d'un clapet d'arrêt (10 ou 11) et **en ce que** les conduites by-pass (12, 13) sont également ménagées dans la structure de base (37) du module de commande (36).

9. Dispositif selon la revendication 8, **caractérisé en ce que** chacune des conduites by-pass (12, 13) ménagées dans la structure de base (37) du module de commande (36) présente deux sections, la première section étant formée par un alésage borgne (40 ou 41) bifurquant d'un canal de gaz d'échappement (38, 39) pour l'essentiel verticalement vers le haut ou vers le bas et la deuxième section subséquent étant formé par un perçage (42, 43) bifurqué de l'alésage borgne (40 ou 41) correspondant et débouchant au niveau de la face frontale avant côté turbine (37a) de la structure de base (37) du module de commande, cet alésage communicant avec l'un des deux alésages de buse (16 ou 17) intégrés au carter de turbine.

10. Dispositif selon la revendication 7, **caractérisé en ce que** deux canaux de gaz d'échappement (38, 39), dans lesquels s'écoulent les gaz d'échappement, sont ménagés l'un à côté de l'autre dans une structure de base (37) du module de commande (36), qui communiquent chacun côté entrée avec une ligne collectrice des gaz d'échappement (5 ou 6) et côté sortie avec une entrée de turbine (8a, 8b), **en ce que** chacun des canaux de gaz d'échappement (38, 39) est équipé d'un clapet d'arrêt (10 ou 11) et **en ce que** les conduites by-pass (12, 13) et les vannes (14, 15) les ouvrant et fermant ainsi qu'au moins certains composants des dispositifs d'actionnement (23, 65) correspondants sont également intégrés à la structure de base (37) du module de commande (36).

11. Dispositif selon la revendication 10, **caractérisé en ce qu'**un alésage borgne (40, 41) bifurque de chaque canal de gaz d'échappement (38, 39) pour l'essentiel verticalement vers le haut ou vers le bas comme première section d'une conduite by-pass (12 ou 13) dans la structure de base (37) du module de commande (36), conduite by-pass dans laquelle la vanne (14, 15) correspondante avec sa tête de vanne (14' 15') est amovible en va-et-vient entre une position d'arrêt et une position de passage et peut être réglée également dans des positions intermédiaires si nécessaire, **en ce qu'**un alésage (42, 43) débouchant sur la face frontale (37a) de la structure de base (37) du module de commande bifurque à partir de chaque alésage borgne (40, 41), formant ainsi une section supplémentaire d'une conduite by-pass (12 ou 13), cet alésage communiquant avec l'un des deux alésages de buse (16, 17) intégrés au carter de turbine, et **en ce que** la tête de vanne (14', 15') de chaque vanne (14, 15) est reliée à un organe d'actionnement (49, 50) du dispositif d'actionnement (23) correspondant par l'intermédiaire d'une tige (47, 48) guidée de manière coaxiale dans un alésage (45, 46) dans la structure de base (37) du module de commande (36).

12. Dispositif selon la revendication 11, **caractérisé en ce que** la tige (47, 48) de chaque vanne (14, 15) est raccordée, dans le cas d'un dispositif d'actionnement électropneumatique (23), à un piston d'actionnement (49, 50) faisant partie de ce dispositif, qui sépare dans une chambre de commande (51, 52) ménagée dans la structure de base (37) derrière l'alésage borgne (40, 41) de manière séparée et coaxiale par rapport à celui-ci, une chambre sous pression avant (53, 54) d'une chambre sous pression arrière (55, 56), ces chambres sous pression arrière (55, 56) étant raccordées chacune par l'intermédiaire d'une conduite d'alimentation (57, 58 ; 59, 60) à une sortie d'une vanne de passage/d'arrêt (30, 31) dont l'une des entrées est reliée à une source pneumatique (25) et dont l'autre entrée est reliée à l'atmosphère de manière à ce que les chambres sous pression puissent être alimentées en air comprimé ou décomprimées en alternance dans un sens ou dans l'autre en fonction de la position de commutation de la vanne de passage/d'arrêt (30, 31) correspondante pour actionner la vanne (14, 15).

13. Dispositif selon la revendication 8, **caractérisé en ce que** les deux clapets d'arrêt (10, 11) sont fixés, pour assurer un actionnement synchrone et uniforme, sur un axe d'actionnement (61), qui est logé de manière pivotante dans un alésage de logement traversant la structure de base (37) du module de commande (36) et qui est relié, par l'intermédiaire d'un levier (62) disposé côté extérieur, à une tige de piston (63) dont l'autre extrémité libre est pourvue d'un piston (64) qui sépare dans un vérin d'alimentation pneumatique une chambre d'alimentation avant (66) d'une chambre d'alimentation arrière (67), les deux chambres d'alimentation (66, 67) étant reliées par l'intermédiaire de conduites d'alimentation (68, 69) aux sorties de la vanne de passage/d'arrêt (32), par le biais de laquelle elles peuvent être alimentées en air comprimé ou décomprimées en alternance dans un sens ou dans l'autre en fonction de sa position de commutation pour le réglage du piston (64) et ainsi des clapets d'arrêt (10, 11).

14. Dispositif selon la revendication 13, **caractérisé en ce que** le vérin pneumatique (65) est fixé à l'extérieur de la structure de base (37) du module de commande (36).

15. Dispositif selon la revendication 1, **caractérisé en ce que** les alésages de buse (16, 17) sont conçus de manière cylindrique ou légèrement conique vers leur sortie (16', 17', 21).
